# EUROPEAN PATENT APPLICATION

(11) **EP 4 601 075 A1**
(43) Date of publication of application: **13.08.2025**
(21) Application number: 24156989.6
(22) Date of filing: 12.02.2024
(51) Int. Cl.: H01M 10/48, H01M 10/613, H01M 50/503, H01M 50/507, H01M 50/516, H01M 50/569, H01M 10/42

(54) **INTERCONNECTION ASSEMBLY, METHOD OF ASSEMBLING AN INTERCONNECTION ASSEMBLY, AND SYSTEM**

(71) Applicant: Rimac Technology LLC, 10431 Sveta Nedelja (HR)
(72) Inventor: Roban, Josip, 10000 Zagreb (HR); Batistic, Mario, 10134 Zagreb (HR)
(74) Representative: Hoffmann Eitle

(57) **Abstract**

An interconnection assembly for a battery system comprising a plurality of battery cells, the layer interconnection assembly comprising: a bottom layer being arranged to connect the plurality of battery cells and to conduct current in a first direction, and a top layer stacked on top of the bottom layer and arranged to conduct current in a second direction opposite to the first direction, wherein the top layer comprises a positive interconnection and a negative interconnection, the positive interconnection comprises a positive terminal connection and the negative interconnection comprises a negative terminal connection.

## Description

### Technical field

The present invention relates to an interconnection assembly, a method of assembling an interconnection assembly and a system comprising the interconnection assembly and a battery system. Specifically, the present invention relates to an interconnection assembly for a battery system, the interconnection assembly comprising a bottom layer and a top layer. The present invention can, for example, find an application in the context of battery system design as common in in energy storages, electric vehicles, consumer products, etc.

### Technical background

In the field of battery design, a common task is to design the interconnection assembly between the battery system and the terminal in view of various constraints appearing in real life scenarios. Here, interconnection assembly may be considered to mean any element that combines a plurality of battery cells and provides a common connection to a terminal.

A single-layer interconnection assembly is a possible option. However, this choice comes with limitations in how to arrange the various elements typically provided on an interconnection assembly, in particular when both the battery system and the terminal impose certain constraints on the interconnection assembly, which may even be opposed to each other. While some of these problems can be solved by increasing the thickness of the single-layer interconnection assembly, this leads to higher costs and bulkier systems.

An alternative approach is a multi-layer interconnection assembly; however, this makes design and manufacture more complex and more expensive and thus can alleviate the problems associated with single-layer interconnection assemblies only to a limited extent.

In addition, there are various other aspects of conventional interconnection assembly design.

The use of busbars and/or cables further adds complexity to the interconnection assembly design.

Further, the configuration/specification of the battery system and the requirements of the current/voltage provided by the terminal may not be aligned. In this case, the interconnection assembly is required to be designed to bridge this gap by appropriate interconnection design.

Moreover, if there are certain requirements regarding the current density and/or current distribution within the interconnection assembly, this may add further complexity to the interconnection assembly design.

A further constraint can be imposed by the cooling oftentimes necessary for the system as a whole, in particular the battery system, specifically by the connection points of the cooling system. Accordingly, also this has to be considered when designing an interconnection assembly as proper cooling/heating control is paramount for the system.

In additional and important aspect is that it is oftentimes advantageous if terminal connections provided on the interconnection assembly were provided in the middle as this opens up space in the battery system and allows for a more flexible high voltage routing. In particular in interconnection assemblies consisting of only one layer, this is difficult if not impossible to achieve due to a lack of space.

Accordingly, there is a need for an interconnection assembly that allows to meet the above constraints. That is, there is a need for an interconnection assembly that can meet geometrical constraints, electronics constraints as well as overall functionality constraints while keeping design and manufacture at a reasonable level of complexity.

### Summary

The above problems, among others, are solved by the subject-matter of the independent claims. Preferred embodiments are given by the subject-matter of the dependent claims.

According to an embodiment of the present invention, there is provided an interconnection assembly for a battery system comprising a plurality of battery cells, the layer interconnection assembly comprising: a bottom layer being arranged to connect the plurality of battery cells and to conduct current in a first direction, and a top layer stacked on top of the bottom layer and arranged to conduct current in a second direction opposite to the first direction, wherein the top layer comprises a positive interconnection and a negative interconnection, the positive interconnection comprises a positive terminal connection and the negative interconnection comprises a negative terminal connection.

According to another embodiment of the present invention, there is provided a method of assembling an interconnection assembly, possibly according to the above embodiment, together with a battery system, the method comprising the steps of: positioning the bottom layer on the battery system, welding the bottom layer on the battery system, positioning the top layer on the bottom layer welded to the battery system, and welding the top layer on the bottom layer.

According to another embodiment of the present invention, there is provided a system comprising an interconnection assembly, possibly according to the above embodiment, and a battery system, possibly assembled according to the above method.

The present invention can provide an interconnection assembly that allows to meet geometrical constraints, electrical constraints and overall functionality constraints by providing an increased flexibility in the design due to the two layers while keeping design and manufacture of the interconnection assembly at a reasonable level.

### Brief description of the drawings

Embodiments of the present invention, which are presented for better understanding the inventive concepts, but which are not to be seen as limiting the invention, will now be described with reference to the figures in which:
- Figure 1: shows an exploded view of exemplary interconnection assembly according to the present invention;
- Figure 2: shows a top layer of an exemplary interconnection assembly according to an embodiment according to the present invention;
- Figure 3: shows a bottom layer of an exemplary interconnection assembly according to an embodiment of the present invention;
- Figure 4: shows an exploded view of exemplary interconnection assembly according to the present invention illustrating the current flow through the interconnection assembly;
- Figure 5: shows a side view of exemplary interconnection assembly according to the present invention illustrating the current flow through the interconnection assembly; and
- Figure 6: shows a side view of exemplary interconnection assembly according to the present invention.

### Detailed description

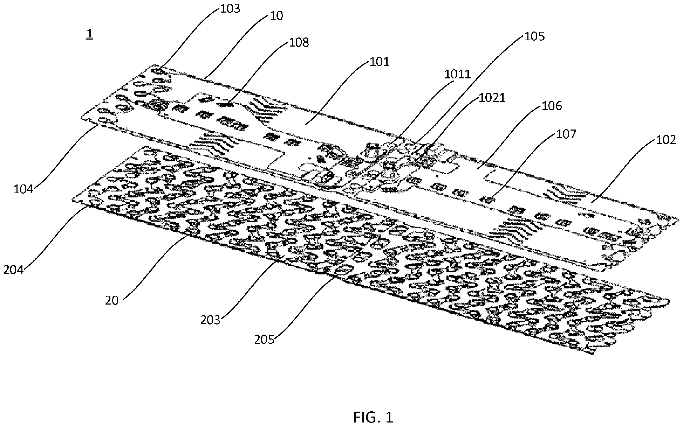

Figure 1 shows an exploded view of exemplary interconnection assembly according to the present invention, that is, figure 1 shows an interconnection assembly 1 for a battery system comprising a plurality of battery cells, the interconnection assembly 1 comprising a bottom layer 20 being arranged to connect the plurality of battery cells and to conduct current in a first direction, and a top layer 10 stacked on top of the bottom layer 20 and arranged to conduct current in a second direction opposite to the first direction, wherein the top layer 10 comprises a positive interconnection 101 and a negative interconnection 102, the positive interconnection 101 comprises a positive terminal connection 1011, and the negative interconnection 102 comprises a negative terminal connection 1021.

Herein, an interconnection assembly may be considered as an element connecting, that is, providing a connection, between the battery system and a terminal. This may serve the purpose of providing the current from the battery system, i.e., the plurality of battery cells of the battery system, to the terminal and may more specifically serve the purpose of bundling the current each individual battery cell may be provided, for example in line with requirements of the application of the battery system.

Here, the positive interconnection 101 and the negative interconnection 102 of the top layer 10, specifically the positive terminal connection 1011 and the negative terminal connection 1021 comprise therein, provide the connection to a terminal while the bottom layer 20 provides the connection to the battery system, for example, by connecting the various cells or modules of the battery system in parallel and/or in series as required.

It is noted that the battery system is not particular limited but may be a battery module, that is, the overall structure is "cell-module-pack", or may be a battery pack, that is, the overall structure is "cell-pack". In other words, the interconnection assembly can be used for any combination of a plurality of battery cells that are collectively referred to within the present disclosure as battery system.

Within this, the top layer 10 connects the battery system with the next level in the hierarchy, while the bottom layer 20 connects the plurality of battery cells in series and/or in parallel.

It is further noted that while the present invention is not limited to an interconnection assembly with two layers, the top layer 10 and the bottom layer 20 and the interconnection assembly 1 may also include further layers such as an intermediate layer provided between the top layer 10 and the bottom layer 20. Moreover, the present invention also includes an interconnection assembly consisting of two layers.

The interconnection assembly comprising two layer makes it possible to meet several of the constraints of interconnection assembly design discussed above, in particular by having a bottom layer that can meet constraints resulting from the battery system and a top layer that can meet constraints resulting from the terminal. Moreover, having two layers addressing the various constraints stemming from various aspects of the overall system allows to flexibly and individually address these constraints.

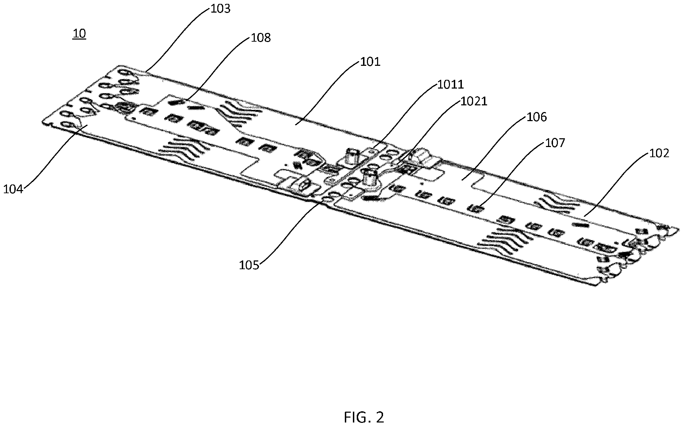

Figure 2 shows a top layer 10 of an exemplary interconnection assembly 1 according to an embodiment according to the present invention. The top layer 10 of figure 2 corresponds to the upper part of the interconnection assembly shown in the exploded view of figure 1.

As can be seen from figure 2, the positive interconnection 101 and the positive terminal connection 1011 may be integrally formed and/or the negative interconnection 102 and the negative terminal connection 1021 may be integrally formed.

Here, integrally formed may mean that the respective elements are manufactured as one piece, i.e., as a single piece. This allows for easier and less costly manufacture, in particular when compared to conventional methods in which the elements are welded to a busbar.

Further, the positive interconnection 101 and the positive terminal connection 1011 may be connected to each other and/or the negative interconnection 102 and the negative terminal connection 1021 may be connected to each other.

Such a connection may be obtained, for example, by welding. In this manner, further connections to terminals may be facilitated with other components using cable(s).

In an embodiment, the positive terminal connection 1011 and the negative terminal connection 1021 may be provided adjacent to each other.

This may facilitate an easier overall construction as it simplifies the connection of the interconnection assembly with the terminal.

Further, as also shown in figures 1 and 2, the positive terminal connection 1011 and the negative terminal connection 1021 may be provided in a middle section of the interconnection assembly 1. Herein, the middle section may be horizontally and/or vertically central within the interconnection assembly 1.

Such a configuration may further simplify the connection of the interconnection assembly with the terminal. Moreover, it is noted that in particular for configurations requiring the positive terminal connection 1011 and the negative terminal connection 1021 to be in the middle section of the interconnection assembly 1, a single-layer design becomes very challenging in view of the geometrical constraints following from the required electrical layout. Hence, the interconnection assembly 1 using a bottom layer 20 and a top layer 10 as components of the interconnection assembly 1 as discussed in the present disclosure is particular advantageous in combination with such a configuration. In particular, such a configuration opens up space in the battery system and allows for a more flexible high voltage routing.

In addition, the top layer 10 of the interconnection assembly 1 may comprise one or more flexible printed circuits (FPCs) 106. FPCs, or more generally flexible circuits or flex circuits, are electronic circuits that are assembled by mounting electronic devices onto flexible plastic substrates. Examples of such flexible plastic substrates are polyimides, polyether ether ketones (PEEKs), transparent conductive polyester films as well as polyester.

The flexible plastic substrate of FPCs allow the overall circuit to conform to a desired shape but also to flex during use. Moreover, they allow electronic packages to be tightly assembled and thus, applied to the interconnection assembly 1 of the present invention, take up less space on the top layer 10 compared to conventional (printed) circuits.

The FPCs may include signal sensor devices and signal transmission devices. In addition, or alternatively to the FPCs, one or more wire harnesses may be provided. Further, the FPCs may also be provided at the bottom layer 20.

Further, as shown in figure 2, the top layer 10 of the interconnection assembly 1 may comprise a top insulation 104 provided at a bottom of the top layer 10. This top insulation 104 is provided between the bottom layer 20 and the top layer 10 and hence insulates these two components from each other.

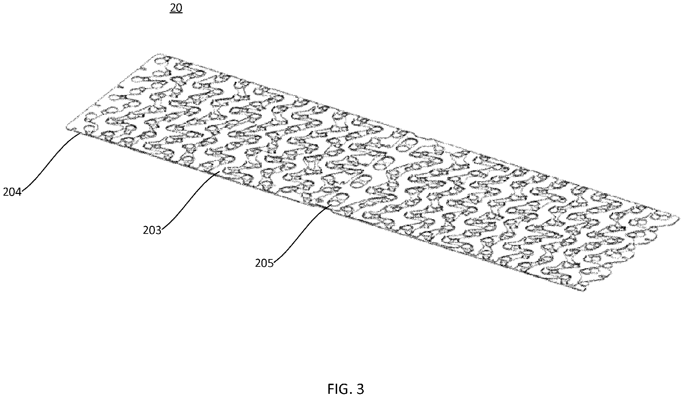

Figure 3 shows a bottom layer 20 of an exemplary interconnection assembly 1 according to an embodiment of the present invention. The bottom layer 20 of figure 1 corresponds to the lower part of the interconnection assembly shown in the exploded view of figure 1.

Figure 3 shows in particular the interconnections and the insulation of the bottom layer 20. That is, the bottom layer 20 may comprise a bottom insulation 204 provided at a bottom of the bottom layer 20. This bottom insulation 204 is provided between the battery system and the bottom layer 20 and hence insulates these two components from each other.

Herein, "top insulation" (discussed above in connection with figure 2) and "bottom insulation" (discussed here in connection with figure 3) may refer to the insulation of the top layer 10 and the bottom layer 20, respectively, and may be used to distinguish between the two insulations such that potential ambiguity can be avoided.

From figures 1 to 3, it becomes clear that the interconnection assembly 1 according to the present invention allows great flexibility in providing electrical interface for power and/or signals on the interconnection assembly 1.

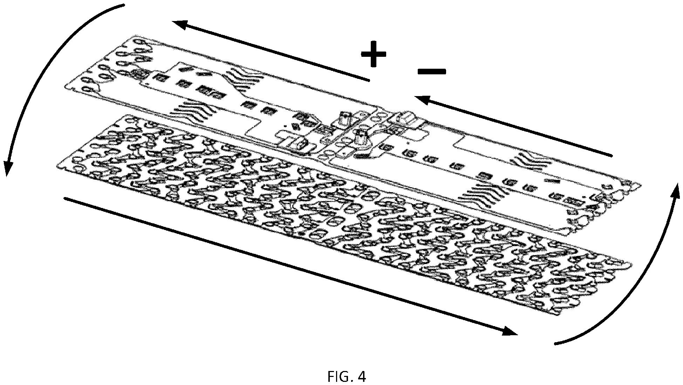

Figure 4 shows an exploded view of exemplary interconnection assembly 1 according to the present invention illustrating the current flow through the interconnection assembly. The interconnection assembly 1 shown in figure 4 corresponds to the interconnection assembly 1 shown in figure 1.

As regards the current flow, as can be seen by the arrows, the "plus" symbol and the "minus" symbol, the current flows from the positive interconnection terminal 1011 through the top layer 10 towards the end of the top layer 10 that is closer to the positive interconnection terminal 1011, then flows into the bottom layer 20, specifically, the corresponding end of the bottom layer 20, and towards the other end of the bottom layer 20. Here, the current flows into the top layer 10, specifically, the corresponding end of the top layer 10, and towards the negative terminal interconnection 1021. In other words, the top layer 10 is conducting the current in an opposite direction compared to the bottom layer 20. This current flow is in particular facilitated by the two-layer structure of the interconnection assembly 1 and the structure of the bottom layer 20 that connects to the respective elements of the plurality of battery cells such that this type of current flow can be facilitated.

In an embodiment of the present invention, the top layer 10 may comprise a plurality of top interconnections 103 provided at end sides of the top layer, the plurality of top interconnections 103 may be arranged to connect the plurality of battery cells and to conduct current in the first direction.

Further, the top interconnections 103 may be arranged to be directly connected to battery cells of the battery system. This may further facilitate conducting the current through the interconnection assembly 1, in particular as indicated above.

In an embodiment according to the present invention, the interconnection assembly 1 may comprise a cooling inlet/outlet 105, 205.

Further, the cooling inlet/outlet 105, 205 may be provided between the positive terminal connection 1011 and the negative terminal connection 1021.

Such a configuration may be advantageous as it allows for a more even distribution of the cooling system within the battery system.

In an embodiment according to the present invention, the top layer 10 may comprise one or more temperature sensors 107.

Further, in an embodiment according to the present invention, the top layer 10 may comprise one or more voltage sensors 108.

Still further, in an embodiment according to the present invention, the top layer 10 may comprise a plurality of holes corresponding to positive and negative tabs of the battery system.

This plurality of holes may allow the battery cells to be accessible for welding through the holes and thus may make assembling the interconnection assembly 1, in particular assembling the interconnection assembly 1 onto the battery system, easier as it allows to reach through the bottom layer 20 directly to the battery system and thus welding may be simpler. Further details thereof are provided below.

In an embodiment according to the present invention, the bottom layer 20 may comprise a plurality of bottom interconnections 203 arranged to connect the plurality of battery cells and to conduct current in the first direction.

Further, the plurality of bottom interconnections 203 may be distributed across the bottom layer 20. Moreover, the plurality of bottom interconnections 203 may be distributed substantially equally. Such a configuration may be advantageous as it allows to maximize the conduction cross section of the bottom layer 20. Thus, an efficient use of the material and/or the bottom layer 20 can be realized, which helps with the thermal performance as partial overheating can be avoided by more uniform distribution of the current flow and the heat and improves the performance of the interconnection assembly 1.

In an embodiment according to the present invention, the entire surface of the bottom layer 20 may be used to distribute interconnections.

Such a configuration also maximizes the conduction cross section of the bottom layer 20 as the entire bottom layer 20 is used for conducting the current.

Further, the interconnections may be distributed among the entire surface of the bottom layer 20 in a way to conduct current in the first direction.

In addition, the plurality of bottom interconnections 203 may be arranged such that a number of battery cells interconnected in parallel differs from a number of battery cells provided in a row of the battery system.

This can, for example, be achieved by providing the bottom interconnections 203 between positive and negative tabs of the battery cells such that more battery cells are connected than provided in a row of the battery system. In other words, the plurality of bottom interconnection 103 are not limited to the configuration of the battery cells provided in the battery system.

This flexibility in design allows to adjust the configuration provided by the battery system for the overall system. For example, if the battery system has a layout with a width of eight cells, a straightforward interconnection assembly would connect these eight cells in parallel. If the application would require a current corresponding to ten cells connected in parallel, this would pose severe difficulties for a conventional interconnection assembly. The interconnection assembly 1 according to the present invention, however, has two layers and thus allows the bottom layer 20 to connect the battery cells differently from the configuration given by the battery system and thus increases the range of applications as a more flexible interconnection assembly is provided. In other words, the interconnection assembly 1 according to the present invention allows to connect the battery cells in a more flexible manner.

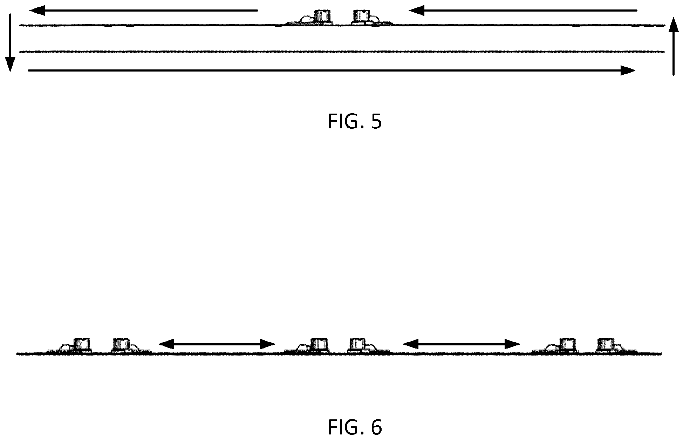

Figure 5 shows a side view of exemplary interconnection assembly according to the present invention illustrating the current flow through the interconnection assembly. The side view of interconnection assembly 1 and the current flow through the interconnection assembly 1 shown in figure 5 corresponds to the interconnection assembly 1 and the current flow through the interconnection assembly 1 shown in the exploded view of figure 4. It further illustrates the current flow through the two-layer design interconnection assembly 1, in particular that the current flow from the positive terminal connection 1011 to the closer end of the top layer 10, then in opposite direction through the bottom layer 20 and finally, in the original direction, to the negative terminal connection 1021.

Further, figure 6 shows a side view of exemplary interconnection assembly according to the present invention. Figure 6 illustrates that the terminal, that is the positive terminal connection 1011 and the negative terminal connection 1021 can be placed anywhere on the top layer 10, thereby further increasing the flexibility provided by designing interconnection assemblies according to the present invention.

According to a further embodiment of the present invention, there is provided a method of assembling an interconnection assembly 1 together with the battery system, the method comprising the steps of: positioning the bottom layer 20 on battery system, welding the bottom layer 20 on the battery system, positioning the top layer 10 on the bottom layer 20 welded to the battery system, and welding the top layer 10 on the bottom layer 20.

Please note that there is no order implied by this formulation and, for example, the steps of positioning the bottom layer and the top layer may be performed before any step of welding is performed. Further, steps of this method may be performed in combination, that is, in one step, such as positioning the battery system, the bottom layer 20 and the top layer 10 in one step. Additionally, also the welding steps may be formed in one step, as also discussed in further detail below.

In a further embodiment, sides of the top layer 10 may be welded to battery cells of the battery system and further voltage pickups of the top layer 10 may be welded to the bottom layer 20. Further, the voltage pickups may be positioned on the flexible printed circuits 106. Voltage pickups may be considered to mean a voltage sensor that is connected to each segment, for example by welding, bolting or any other method, and may mean that is "picks up" a voltage such that this voltage can be measured.

In another embodiment, the top layer 10 may be welded on the bottom layer 20 and battery cells of the battery system through a plurality of holes in the top layer 10, and welding the bottom layer 20 on the battery system and welding the top layer 10 on the bottom layer 20 is performed in a single step. In other words, the plurality of holes in the top layer 10 may allow to reach through the top layer 10 directly to the bottom layer 20 and the battery system such that welding of all three components can be combined. In this way, the interconnection assembly 1 according to the present invention allows for an improved, that is, easier, assembly.

In a further embodiment according to the present invention, there is provided a system comprising an interconnection assembly 1 according to an embodiment of the present invention as well as a battery system. The system may be assembled according to a method according to an embodiment of the present invention.

Although detailed embodiments have been described, these only serve to provide a better understanding of the invention defined by the independent claims and are not to be seen as limiting to the present invention.

## Claims

1. An interconnection assembly (1) for a battery system comprising a plurality of battery cells, the layer interconnection assembly (1) comprising:
a bottom layer (20) being arranged to connect the plurality of battery cells and to conduct current in a first direction, and
a top layer (10) stacked on top of the bottom layer (20) and arranged to conduct current in a second direction opposite to the first direction,
wherein the top layer (10) comprises a positive interconnection (101) and a negative interconnection (102),
the positive interconnection (101) comprises a positive terminal connection (1011) and the negative interconnection (102) comprises a negative terminal connection (1021).

2. The interconnection assembly (1) according to claim 1, wherein the positive interconnection (101) and the positive terminal connection (1011) are integrally formed and the negative interconnection (102) and the negative terminal connection (1021) are integrally formed,
or
wherein the positive interconnection (101) and the positive terminal connection (1011) are connected to each other and the negative interconnection (102) and the negative terminal connection (1021) are connected to each other.

3. The interconnection assembly (1) according to claim 1 or 2, wherein the positive terminal connection (1011) and the negative terminal connection (1021) are provided adjacent to each other.

4. The interconnection assembly (1) according to any one of claims 1 to 3,
wherein the positive terminal connection (1011) and the negative terminal connection (1021) are provided in a middle section of the interconnection assembly (1), and
wherein preferably the middle section is horizontally and/or vertically central within the interconnection assembly (1).

5. The interconnection assembly (1) according to any one of claims 1 to 4, wherein the top layer (10) comprises one or more flexible printed circuits (106).

6. The interconnection assembly (1) according to any one of claims 1 to 5,
wherein the top layer (10) comprises a top insulation (104) provided at a bottom of the top layer (10), and/or
wherein the bottom layer (20) comprises a bottom insulation (204) provided at a bottom of the bottom layer (20).

7. The interconnection assembly (1) according to any one of claims 1 to 6, wherein the bottom layer (20) comprises a plurality of bottom interconnections (203) arranged to connect the plurality of battery cells and to conduct current in the first direction,
wherein preferably the plurality of bottom interconnections (203) is distributed across the bottom layer (20), preferably distributed substantially equally,
wherein further preferably the entire surface of the bottom layer (20) is used to distribute interconnections, preferably in a way to conduct current in the first direction.

8. The interconnection assembly (1) according to claim 7, wherein the plurality of bottom interconnections (203) is arranged such that a number of battery cells interconnected in parallel differs from a number of battery cells provided in a row of the battery system.

9. The interconnection assembly (1) according to any one of claims 1 to 8,
wherein the top layer (10) comprises a plurality of top interconnections (103) provided at end sides of the top layer, the plurality of top interconnections (103) arranged to connect the plurality of battery cells and to conduct current in the first direction,
wherein preferably the top interconnections (103) are arranged to be directly connected to battery cells of the battery system.

10. The interconnection assembly (1) according to any one of claims 1 to 9,
wherein the interconnection assembly (1) comprises a cooling inlet/outlet (105, 205),
wherein preferably the cooling inlet/outlet (105, 205) is provided between the positive terminal connection (1011) and the negative terminal connection (1021).

11. The interconnection assembly (1) according to any one of claims 1 to 10,
wherein the top layer (10) comprises one or more temperature sensors (107), and/or
wherein the top layer (10) comprises one or more voltage sensors (108).

12. The interconnection assembly (1) according to any of claims 1 to 11, wherein the top layer (10) comprises a plurality of holes corresponding to positive and negative tabs of the battery system.

13. A method of assembling the interconnection assembly (1) according to any one of claims 1 to 12 together with the battery system, the method comprising the steps of:
- positioning the bottom layer (20) on battery system,
- welding the bottom layer (20) on the battery system,
- positioning the top layer (10) on the bottom layer (20) welded to the battery system, and
- welding the top layer (10) on the bottom layer (20).

14. The method according to claim 13, wherein sides of the top layer (10) are welded to battery cells of the battery system and voltage pickups of the top layer (10) are welded to the bottom layer (20),
or
wherein the top layer (10) is welded on the bottom layer (20) and battery cells of the battery system through a plurality of holes in the top layer (10), and
wherein welding the bottom layer (20) on the battery system and welding the top layer (10) on the bottom layer (20) is performed in a single step.

15. A system comprising the interconnection assembly (1) according to any of claims 1 to 12 and the battery system, preferably assembled according to the method of claim 13 or 14.
